# FASCICULE DE BREVET EUROPEEN

(11) **EP 0 657 325 B1**
(45) Date de publication et mention de la délivrance du brevet: **07.05.1997**
(21) Numéro de dépôt: 94402633.5
(22) Date de dépôt: 18.11.1994
(51) Int. Cl.: B60R 11/02

(54) **Panneau d'étanchéité préformé pour automobile, comportant un emplacement pour haut-parleur**
Vorgeformte Abdichtungstrennwand für Kraftfahrzeuge mit einer Aufnahme für Lautsprecher
Preformed sealing panel for automobiles with speaker housing

(30) Priorité: 08.12.1993 FR 9314731
(43) Date de publication de la demande: 14.06.1995
(73) Titulaire: PLASTO S.A., 21300 Chenôve (FR)
(72) Inventeur: Fumey, Franck, F-21000 Dijon (FR)
(74) Mandataire: Clisci, Serge

(56) Documents cités:
- DE-A- 2 724 631
- DE-A- 3 220 779
- DE-A- 3 510 018
- DE-C- 3 817 848
- US-A- 4 790 407
- US-A- 4 853 966
- US-A- 4 905 860
- US-A- 4 928 788
- US-A- 5 117 938
- PATENT ABSTRACTS OF JAPAN vol. 17, no. 694 (M-1531) 17 Décembre 1993 & JP-A-05 238 263 (KINUGAWA) 17 Septembre 1993
- PATENT ABSTRACTS OF JAPAN vol. 13, no. 117 (E-731) 22 Mars 1989 & JP-A-63 287 296 (HONDA)

## Description

La présente invention concerne un panneau d'étanchéité pour les automobiles, notamment pour réaliser l'étanchéité des portières, et dans lequel est réalisé un emplacement particulier du haut-parleur qui permet de conserver les qualités acoustiques d'origine du haut-parleur.

### ART ANTERIEUR

Lors de la construction des véhicules automobiles, il est nécessaire d'assurer l'étanchéité des intérieurs de portières afin d'éviter l'introduction des eaux pluviales à l'intérieur de l'habitacle et au contact des habillages intérieurs du véhicule. Pour réaliser cette étanchéité, il est connu de coller une feuille imperméable sur les structures internes de la portière, cette feuille ayant pour fonction d'éviter les infiltrations d'eau, les passages d'air et de poussières vers l'intérieur du véhicule. Ces feuilles imperméables sont généralement composées d'un film en matière plastique revêtu d'une couche adhésive afin de faciliter la mise en place. On peut utiliser également des films en mousse, notamment en mousse de polyéthylène ; de tels films en mousse de polyéthylène ont en général une épaisseur comprise entre 2mm et 10mm, sont rendus adhésifs par un cordon de colle sur leur pourtour, et peuvent être thermoformés pour s'adapter de façon intime à la structure portante en tôle emboutie de la portière. On peut également utiliser des structures plus complexes composées de plusieurs couches de différents matériaux, ces perfectionnements ayant généralement pour objet d'améliorer l'insonorisation de l'habitacle et le confort des passagers.

Un panneau d'étanchéité préformé selon le preambule de la revendication 1 se retrouve dans DE-A-35 10 018.

Toutefois, la présence de ce panneau d'étanchéité a pour effet de perturber le fonctionnement des haut-parleurs qui sont le plus souvent positionnés dans le volume de la structure de portière.

En effet, le panneau d'étanchéité se trouve a proximité immédiate de la face postérieure du haut-parleur et réfléchit l'onde arrière vers l'habitacle. Le retour de l'onde arrière perturbe considérablement la qualité acoustique perceptible à l'intérieur de l'habitacle. Afin d'éviter cet inconvénient, il est courant de découper le panneau d'étanchéité à l'endroit où doit être logé le haut-parleur : on obtient ainsi un résultat meilleur d'un point de vue acoustique, mais le panneau ne peut plus jouer son rôle quant à l'étanchéité et il peut se produire des infiltrations d'eau ou de poussière vers la garniture intérieure de la portière.

### BUT DE L'INVENTION :

La présente invention a pour objet de proposer un panneau d'étanchéité, d'un type nouveau, notamment pour les portières d'automobile et qui a pour avantage de préserver les qualités de la réponse acoustique des haut-parleurs.

### OBJET DE L'INVENTION :

Le but de l'invention est atteint par les caractéristiques définies par la revendication 1.

Selon l'invention, on réalise un panneau d'étanchéité pour portière de véhicule à partir d'une feuille de matière que l'on met en forme de façon à obtenir un emplacement de haut-parleur présentant une structure particulière et dont le fond comporte des alvéoles qui sont ouvertes à une des leurs extrémités et qui sont munies d'au moins une ouverture à l'autre extrémité opposée.

### DESCRIPTION DETAILLEE :

Pour réaliser un panneau d'étanchéité à caractéristique acoustique améliorée, selon l'invention, on utilise une feuille de matière qui peut être mise en forme. La feuille de matière est généralement en matière plastique thermoformable comme par exemple du polyéthylène, du polypropylène, et peut contenir des agents de renforcement comme des fibres, des agents ignifugeants. Ces feuilles peuvent se présenter sous forme de film, mais on préfère utiliser les matières plastiques sous forme de mousse à cellules fermées, la feuille ayant une épaisseur comprise entre 1mm et 10mm. On peut également utiliser des feuilles composites thermoformables formées de plusieurs couches de matériaux différents, notamment si l'on souhaite améliorer l'isolation thermique et l'isolation phonique de l'habitacle.

La feuille de matière est mise en forme de façon à s'adapter parfaitement aux structures de la portière à l'intérieure de laquelle elle doit être mise en place. La mise en forme se fait généralement par thermoformage ou par hydroformage, selon des méthodes connues de l'homme de l'art.

Selon l'invention, en plus des formes particulières dues à la structure de la portière, on réalise au fond de l'emplacement réservé au haut-parleur des reliefs particuliers dont la fonction est de supprimer le retour de l'onde arrière dudit haut-parleur. Pour obtenir ce résultat, les reliefs sont disposés sur la face externe du fond de l'emplacement opposée à la face interne sur laquelle prend appui le haut-parleur et se présentent sous la forme de troncs de cônes dont la section peut être circulaire, carrée ou trapézoïdale. L'emplacement du haut-parleur d'un panneau d'étanchéité selon l'invention se présente ainsi suivant une cuvette dont le fond est garni d'une multitude de cônes dirigés vers la stucture de la portière.

Pour obtenir un bon résultat acoustique, on forme sur tout le fond de la cuvette des alvéoles en forme de cône dont le diamètre moyen est compris entre 3mm et 20mm et dont la profondeur est comprise entre 3mm et 25 mm environ.

De préférence, les cônes sont perforés et l'axe des cônes est incliné vers le bas selon un angle α compris entre 4° et 20° par rapport à l'horizontale. Cette inclinaison permet ainsi d'éviter l'entrée d'eau par les perforations.

En variante, il est également possible d'ajouter sur le fond de l'emplacement du haut-parleur un film de très faible épaisseur (environ 5µm à 30µm) en polyéthylène, polyester, polyuréthane ou polypropylène, collé ou soudé : un tel film permet d'obtenir une bonne étanchéité du panneau tout en maintenant l'amélioration acoustique apportée par les reliefs perforés.

L'exemple suivant et les dessins permettent de mieux comprendre l'objet de l'invention, mais ne sauraient être limitatifs quant aux variantes, au mode de fabrication et aux utilisations qui en sont faites.

La figure 1 est une vue en perspective de la face externe de l'emplacement du haut-parleur d'un panneau d'étanchéité pour voiture automobile.

La figure 2 est une vue en perspective de la face interne du même emplacement du haut-parleur.

La figure 3 est une vue en coupe verticale d'un des cônes représentés sur la figure 1.

La figure 4 représente les courbes 1 et 2 de réponse en fréquence d'un haut-parleur en l'absence et en présence respectivement d'un panneau d'étanchéité selon l'invention.

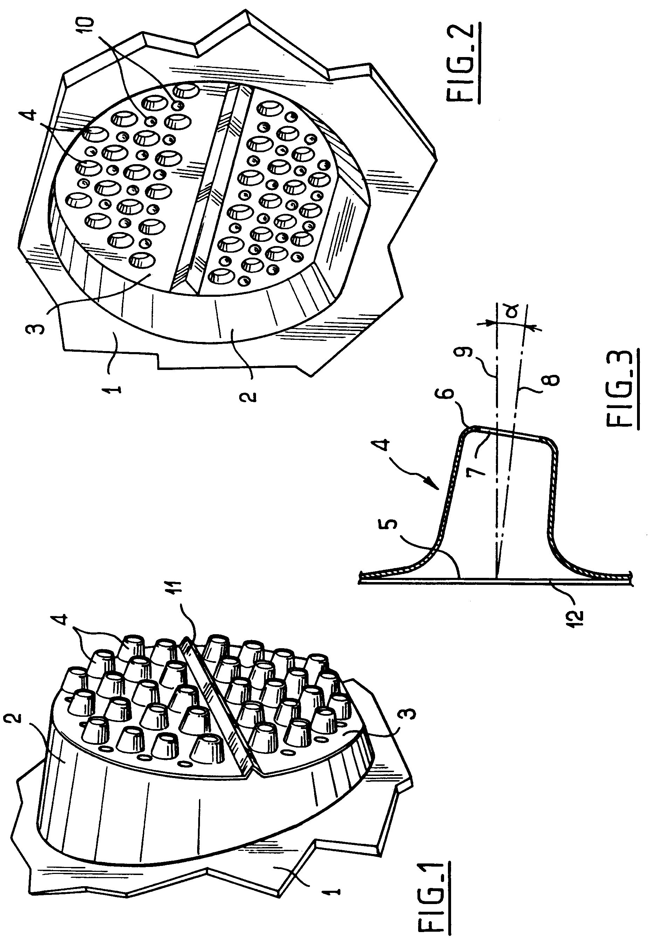

A partir d'une feuille en mousse de polyéthylène à cellules fermées (densité 67kg/m³), contenant un agent ignifugeant et, d'une épaisseur de 2mm, on réalise le thermoformage d'un panneau d'étanchéité 1 pour portière d'automobile comportant un emplacement 2 pour haut-parleur. L'emplacement pour le haut-parleur se présente suivant une cuvette de forme sensiblement circulaire d'un diamètre intérieur d'environ 136mm et de hauteur comprise entre 30mm et 50mm (la forme de l'emplacement correspond sensiblement à la figure 1). Sur la face externe du fond 3 de l'emplacement 2 du haut-parleur sont réparties cinquante alvéoles 4. Chaque alvéole 4, qui peut être de section quelconque, de révolution ou non, présente une extrémité 5 ouverte et une extrémité opposée 6 munie d'au moins une ouverture 7, ainsi que cela est représenté sur la figure 3. De préférence, chaque alvéole 4 est en forme de tronc de cône dont la base est ouverte et dont le sommet est pourvu de l'ouverture 7 pour le passage des ondes acoustiques. L'axe 8 de chaque alvéole 4 est incliné d'un angle α d'environ 7° vers le bas par rapport à la perpendiculaire 9 au fond 3 de l'emplacement ou cuvette 2. Bien évidemment, il est possible de ménager plusieurs ouvertures plus petites sur l'extrémité 6 de chaque alvéole 4. Après mise en place sur le véhicule, l'axe des alvéoles sera incliné vers le bas suivant un angle de 15° par rapport à l'horizontale.

De préférence, la distribution des alvéoles 4 est réalisée en quinconce mais elle pourrait être quelconque, uniforme ou non. Dans la réalisation présente, les alvéoles sont toutes de même dimension, mais il est également possible de prévoir des alvéoles de taille différente, par exemple des alvéoles de petit diamètre dans la partie supérieure et des alvéoles de plus grand diamètre dans la partie inférieure.

De plus, des protubérances 10 sont prévues entre les alvéoles 4, le relief de ces protubérances étant dirigé vers l'intérieur de l'emplacement 2 du haut-parleur, de manière à servir d'appui pour ce dernier et d'éviter que lesdites alvéoles ne soient obturées par le haut-parleur. Une nervure de renfort 11 peut être également prévue sur le fond 3 de l'emplacement 2, les alvéoles 4 pouvant être distribués symétriquement par rapport à ladite nervure 11.

Le thermoformage est réalisé par chauffage à l'aide d'un système à rayonnement infrarouge sectoriel (chauffage pendant environ 10 secondes) puis formage par le vide sur un moule en aluminium. Après la mise en forme, les extrémités de tous les cônes sont découpées par un système à poinçon-matrice de façon à pratiquer des ouvertures d'un diamètre de 4mm.

Le panneau ainsi obtenu est rendu adhésif sur tout son pourtour à l'aide d'un cordon de colle thermofusible protégé jusqu'à son utilisation par un papier protecteur anti adhésif.

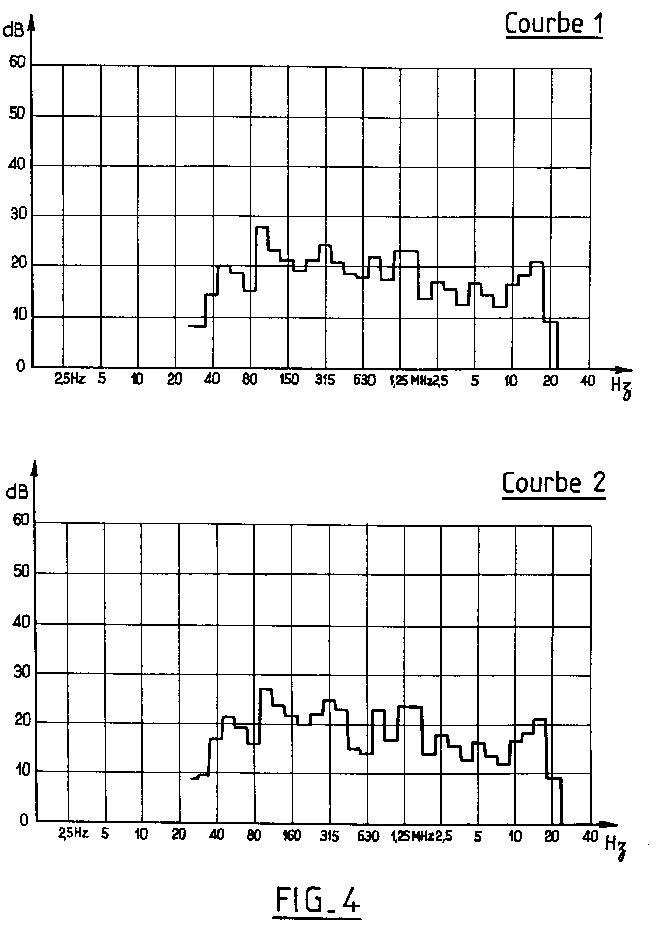

La figure 4 représente les courbes de réponse en fréquence d'un haut-parleur en l'absence (courbe 1) et en présence (courbe 2) du panneau d'étanchéité réalisé dans l'exemple ci-dessus. On constate sur ces courbes que la réponse du haut-parleur n'est pratiquement pas affectée par la présence du panneau d'étanchéité, et que la qualité acoustique de l'ensemble est conservée.

En variante, on ajoute au panneau 1 un disque 12 de 135mm de diamètre découpé dans un film de polyester adhésivé d'épaisseur 12µm et que l'on colle sur la partie intérieure du fond 3 de l'emplacement 2 du haut-parleur. On obtient ainsi un panneau qui reste parfaitement étanche aux poussières et qui ne perturbe pas ou très peu l'acoustique du haut-parleur.

Les panneaux d'étanchéité selon les exemples ci-dessus trouvent leur application dans l'étanchéité des portières automobiles équipées de haut-parleur afin de conserver les qualités acoustiques des équipements audiophoniques.

## Revendications

1. Panneau d'étanchéité (1) préformé pour automobile comportant un emplacement (2) pour haut-parleur caractérisé en ce que le fond (3) dudit emplacement du haut-parleur est muni d'alvéoles (4) ouvertes à une de leurs extrémités (5) et munies d'au moins une ouverture (7) à l'autre extrémité opposée (6),la hauteur des alvéoles étant comprise entre 3mm et 25mm.

2. Panneau d'étanchéité selon la revendication 1, caractérisé en ce que l'axe (8) de chaque alvéole (4) est incliné par rapport à la perpendiculaire (9) au fond (3) dudit emplacement.

3. Panneau d'étanchéité selon l'une des revendications 1 ou 2, caractérisé en ce que l'axe (8) des alvéoles est incliné vers le bas d'un angle compris entre 4° et 20° par rapport à l'horizontale lorsque le panneau est mis en place sur le véhicule.

4. Panneau d'étanchéité selon l'une des revendications 1 à 3, caractérisé en ce que les alvéoles (4) sont disposées en quinconce.

5. Panneau d'étanchéité selon l'une des revendications 1 à 4, caractérisé en ce que chaque alvéole (4) est en forme de tronc de cône.

6. Panneau d'étanchéité selon la revendication 5, caractérisé en ce que le diamètre moyen de chaque alvéole (4) est compris entre 3mm et 20mm.

7. Panneau d'étanchéité selon la revendication 1, caractérisé en ce que des protubérances (10) sont prévues entre les alvéoles (4) sur la face interne du fond (3) de l'emplacement (2).

8. Panneau d'étanchéité selon la revendication 1, caractérisé en ce qu'une rainure de renfort (11) est ménagée dans le fond (3) de l'emplacement (2).

9. Panneau d'étanchéité selon l'une des revendications 1 à 8, caractérisé en ce que l'on fixe par collage ou soudage sur la face interne du fond (3) de l'emplacement (2) du haut-parleur, un film (12) d'épaisseur comprise entre 5µm et 30µm.

10. Application d'un panneau d'étanchéité selon les revendications 1 à 9 pour l'amélioration de l'acoustique des haut-parleurs dans les véhicules automobiles.

## Claims

1. Preformed sealing panel (1) for automobiles incorporating a loudspeaker housing (2) characterised in that the bottom (3) of said loudspeaker housing is provided with cells (4) open at one end (5) and having at least one opening (7) at the opposite end (6), the height of the cells being between 3 mm and 25 mm.

2. Sealing panel according to claim 1 characterised in that the axis (8) of each cell (4) is inclined to the perpendicular (9) to the bottom (3) of said housing.

3. Sealing panel according to claim 1 or claim 2 characterised in that the axis (8) of the cells is inclined downwardly at an angle between 40° and 20° to the horizontal when the panel is fitted to the vehicle.

4. Sealing panel according to any one of claims 1 to 3 characterised in that the cells (4) are in a quincunx arrangement.

5. Sealing panel according to any one of claims 1 to 4 characterised in that each cell (4) is frustoconical.

6. Sealing panel according to claim 5 characterised in that the average diameter of each cell (4) is between 3 mm and 20 mm.

7. Sealing panel according to claim 1 characterised in that protuberances (10) are provided between the cells (4) on the inside face of the bottom (3) of the housing (2).

8. Sealing panel according to claim 1 characterised in that a reinforcing rib (11) is formed in the bottom (3) of the housing (2).

9. Sealing panel according to any one of claims 1 to 8 characterised in that a film (12) between 5 µm and 30 µm thick is glued or welded to the inside face of the bottom (3) of the loudspeaker housing (2).

10. Application of a sealing panel according to any one of claims 1 to 9 to improving the acoustics of loudspeakers in automobile vehicles.

## Patentansprüche

1. Vorgeformte Abdichtungsplatte (1) für Automobile, mit einer Aufnahme (2) für einen Lautsprecher, dadurch gekennzeichnet, daß der Boden (3) der Aufnahme für den Lautsprecher mit an einem ihrer Enden (5) offenen Zellen (4) versehen ist, die an ihrem entgegengesetzten Ende (6) mit wenigstens einer Öffnung (7) ausgebildet sind, wobei die Höhe der Zellen zwischen 3 mm und 25 mm liegt.

2. Abdichtungsplatte nach Anspruch 1, dadurch gekennzeichnet, daß die Achse (8) jeder Zelle (4) in bezug aufdie Serkrechte (9) auf den Boden (3) der Aufnahme geneigt ist.

3. Abdichtungsplatte nach einem der Ansprüche 1 oder 2, dadurch gekennzeichnet, daß die Achse (8) der Zellen in einem zwischen 4° und 20° in bezug zur Horizontalen nach unten geneigt ist, wenn die Platte in dem Fahrzeug angebracht ist.

4. Abdichtungsplatte nach einem der Ansprüche 1 bis 3, dadurch gekennzeichnet, daß die Zellen (4) versetzt angeordnet sind.

5. Abdichtungsplatte nach einem der Ansprüche 1 bis 4, dadurch gekennzeichnet, daß jede Zelle (4) kegelstumpfförmig ausgebildet ist.

6. Abdichtungsplatte nach Anspruch 5, dadurch gekennzeichnet, daß der mittlere Durchmesser jeder Zelle (4) zwischen 3 mm und 20 mm beträgt.

7. Abdichtungsplatte nach Anspruch 1, dadurch gekennzeichnet, daß zwischen den Zellen (4) auf der Innenfläche des Bodens (3) der Aufnahme (2) Vorsprünge (10) vorgesehen sind.

8. Abdichtungsplatte nach Anspruch 1, dadurch gekennzeichnet, daß im Boden (3) der Aufnahme (2) eine Verstärkungsrille (11) ausgebildet ist.

9. Abdichtungsplatte nach einem der Ansprüche 1 bis 8, dadurch gekennzeichnet, daß aufder Innenseite des Bodens (3) der Aufnahme (2) für den Lautsprecher ein Film (12) mit einer Dicke zwischen 5 µm und 30 µm durch Kleben oder Schweißen befestigt ist.

10. Verwendung einer Abdichtungsplatte nach einem der Ansprüche 1 bis 9 zur Verbesserung der Akustik von Lautsprechern in Automobilen.
